# EUROPEAN PATENT APPLICATION

(11) **EP 4 246 088 A1**
(43) Date of publication of application: **20.09.2023**
(21) Application number: 23151237.7
(22) Date of filing: 19.07.2021
(51) Int. Cl.: G01C 15/00, G05D 1/00, G01N 21/88, G01S 17/42, G01S 17/86, G01S 17/933, B64U 101/30

(54) **SURVEYING SYSTEM, SURVEYING METHOD, AND SURVEYING PROGRAM**

(30) Priority: 27.07.2020 JP 2020126634
(62) Divisional of application: 21186339.4
(71) Applicant: TOPCON CORPORATION, Tokyo 174-8580 (JP)
(72) Inventor: ITO, Tadayuki, Tokyo, 174-8580 (JP); SASAKI, Takeshi, Tokyo, 174-8580 (JP)
(74) Representative: Eisenführ Speiser

(57) **Abstract**

A surveying system includes a surveying device, a UAV, and a processor. The surveying device includes a first camera and a combination of a laser scanner and a total station. The UAV is mounted with a second camera. The processor includes an image data receiving unit, a laser scanning data receiving unit, a specified part receiving unit, a flight plan setting unit, and a camera direction setting unit. The specified part receiving unit receives a desired part specified in a photographic image taken by the first camera. The flight plan setting unit sets a flight route of the UAV that contains a position of a viewpoint for viewing the desired part, on the basis of laser scanning data. The camera direction setting unit sets directions of the second camera during flight of the UAV along the flight route, on the basis of the laser scanning data.

## Description

### BACKGROUND OF THE INVENTION

### Technical Field

The present invention relates to a technique using information obtained by a laser scanner.

### Background Art

Japanese Unexamined Patent Application Laid-Open No. 2019-117127 discloses a technique for controlling flight of an UAV by using a laser distance measurement technology.

For example, a technique for visually inspecting a bridge by using an unmanned aerial vehicle (UAV) has been developed. In this technique, setting a flight route of the UAV is a great concern. It is necessary to make the UAV fly to a position where the UAV can easily take photographs of a desired object without coming into contact with a bridge pier, a pillar, etc., and without these structural elements interfering with the photographing.

Japanese Unexamined Patent Application Laid-Open No. 2019-117127 discloses a technique for preventing a UAV from coming into contact with a bridge. However, Japanese Unexamined Patent Application Laid-Open No. 2019-117127 does not disclose nor suggest an idea of setting a flight route that is appropriate for a UAV to take photographs.

### SUMMARY OF THE INVENTION

In view of these circumstances, an object of the present invention is to provide a technique for effectively utilizing photographic images that are obtained by an UAV in inspection or monitoring by photographing using the UAV.

The present invention provides a surveying system for processing surveying data. The surveying data includes data that is obtained by a surveying device and data that is obtained by a UAV. The surveying device has a first camera, and a combination of a laser scanner and a total station, in which relationships of exterior orientation parameters between the first camera, the laser scanner, and the total station are preliminarily known. The UAV is mounted with a second camera and is capable of autonomous flying. The surveying system includes an image data receiving unit, a laser scanning data receiving unit, a specified part receiving unit, a flight plan setting unit, and a camera direction setting unit. The image data receiving unit receives image data of photographic images taken by the first camera and the second camera. The laser scanning data receiving unit receives laser scanning data obtained by the laser scanner. The specified part receiving unit receives a desired part specified in the photographic image taken by the first camera. The flight plan setting unit sets a flight route of the UAV that contains a position of a viewpoint for viewing the desired part, on the basis of the laser scanning data. The camera direction setting unit sets directions of the second camera during flight of the UAV along the flight route, on the basis of the laser scanning data.

In the present invention, the flight route of the UAV, and the directions during flight, of the camera that is mounted on the UAV, are set on the basis of result of laser scanning by the surveying device. Thus, the UAV is prevented from interfering with an object that is subjected to laser scanning, the photographing position of the UAV is appropriately set, and the directions of the camera mounted on the UAV are appropriately set for photographing during flight.

In the present invention, it is preferable that the UAV obtain a photographic image of the desired part, and that the position of the viewpoint be in front of the desired part. The viewpoint is set so as to be in front of the object, whereby a photographic image appropriate for inspection and deterioration assessment of the object is obtained.

In the present invention, it is preferable that a normal of the desired part be calculated on the basis of the laser scanning data, and that the position of the viewpoint be calculated on the basis of the normal. The viewpoint is set on a normal of the desired part, whereby a viewpoint for viewing a front of the desired part is obtained.

In the present invention, the surveying system may further include a first 3D model generator and a second 3D model generator. The first 3D model generator may generate a first 3D model of the object that is laser scanned, on the basis of the laser scanning data obtained in laser scanning. The second 3D model generator may generate a second 3D model of the object in accordance with the principle of stereo photogrammetry, on the basis of the photographic images taken by the second camera.

In the present invention, while the UAV is flying, the surveying device may position the UAV by using the total station, and the second 3D model may be generated in the same coordinate system as the first 3D model, on the basis of results of positioning of the UAV by the total station.

In this case, position and attitude of the second camera mounted on the UAV, relative to the object, in structure from motion (SFM) (multi-view stereo photogrammetry) using the second camera, are defined in a coordinate system that is employed in the surveying device. Thus, the second 3D model is defined in the same coordinate system as the first 3D model. This enables comparing and integrating of the first 3D model and the second 3D model without complicated postprocessing.

The UAV is positioned by using the total station function of the surveying device, and therefore, it is not necessary for the UAV to receive signals from a GNSS. This eliminates the need to use a GNSS mounted on the UAV, which GNSS can cause large errors. Alternatively, a UAV that does not have a GNSS mounted thereon can also be used. In addition, highly accurate measurement can be performed under a bridge where it is difficult to use a GNSS, and in a location where malfunctions tend to occur when using a GNSS, such as at a location between mountains and in an urban area having highrise buildings.

In the present invention, the surveying system may further include a mapping unit that maps the photographic images taken by the second camera, on the first 3D model, on the basis of the result of positioning of the UAV by the total station.

Relative positional relationships between the positions of the second camera and a large number of feature points in the photographic images taken by the second camera are determined in accordance with the principle of SFM, whereby a relative 3D model is obtained, that is, relative orientation is performed. Herein, the UAV is positioned by the total station, whereby the position of the second camera mounted on the UAV is identified. Thus, the relative 3D model is provided with a scale; that is, absolute orientation is performed. The positions of the feature points in the photographic images taken by the second camera are identified in the coordinate system employed in the surveying device in use. That is, the positions of the feature points in the photographic images taken by the second camera are identified in the coordinate system that defines the first 3D model.

This reveals the relationships between the first 3D model and the photographic images taken by the second camera, in other words, which part of the first 3D model corresponds to which photographic image taken by the second camera. This enables associating detailed images of the object taken by the second camera, with the first 3D model, whereby the detailed images of the object taken by the second camera can be mapped on the first 3D model. For example, more detailed textures that are obtained by the second camera can be pasted onto the first 3D model.

In the present invention, the mapping may involve embedding or superimposing the photographic images taken by the second camera, in or on the first 3D model. The mapping may be performed by pasting, associating in terms of data, associating using a balloon or a leader on a display, or other manner.

In the present invention, the surveying system may also include a mapping unit that maps the photographic images taken by the second camera, on the photographic image taken by the first camera, on the basis of the result of positioning by the total station. The mapping involves embedding or superimposing the photographic images taken by the second camera, in or on the photographic image taken by the first camera.

In the present invention, the laser scanner may perform laser scanning of an object to be surveyed, the second camera may detect a bright point of laser scanning light that is emitted on the object to be surveyed, in laser scanning, and attitude of the second camera may be calculated on the basis of the bright point.

For example, it is assumed that one bright point of the laser scanning light is detected in the photographic image taken by the second camera. In this case, on the condition that the position of this bright point in the image, which is a two-dimensional position in the image, a focal distance of the second camera, and a 3D position of the object, are known, attitude of the second camera can be determined. In addition, detecting two or more bright points enables determining position and attitude of the second camera.

In a three-dimensional measurement in multi-view stereo photogrammetry by using the second camera, relative orientation, absolute orientation, and bundle adjustment calculation are conducted. The bright point may be used as a constraint point in the bundle adjustment calculation, whereby burden in calculation is reduced, and accuracy of the calculation is improved.

The present invention can also be understood to be a surveying method for processing surveying data. The surveying data includes data that is obtained by a surveying device and data that is obtained by a UAV. The surveying device has a first camera and a combination of a laser scanner and a total station, in which relationships of exterior orientation parameters between the first camera, the laser scanner, and the total station are preliminarily known. The UAV is mounted with a second camera and is capable of autonomous flying. The surveying method includes receiving image data of photographic images taken by the first camera and the second camera, receiving laser scanning data obtained by the laser scanner, and receiving a desired part specified in the photographic image taken by the first camera. The surveying method also includes setting a flight route of the UAV that contains a position of a viewpoint for viewing the specified part, on the basis of the laser scanning data, and setting directions of the second camera during flight of the UAV along the flight route, on the basis of the laser scanning data.

The present invention can also be understood to be a non-transitory computer recording medium storing computer-executable instructions for processing surveying data. The surveying data includes data that is obtained by a surveying device and data that is obtained by a UAV. The surveying device has a first camera and a combination of a laser scanner and a total station, in which relationships of exterior orientation parameters between the first camera, the laser scanner, and the total station are preliminarily known. The UAV is mounted with a second camera and is capable of autonomous flying. The computer-executable instructions are configured to, when executed by a computer processor, cause the computer processor to receive image data of photographic images taken by the first camera and the second camera, receive laser scanning data obtained by the laser scanner, and receive a desired part specified in the photographic image taken by the first camera. The computer-executable instructions are further configured to set a flight route of the UAV that contains a position of a viewpoint for viewing the specified part, on the basis of the laser scanning data, and set directions of the second camera during flight of the UAV along the flight route, on the basis of the laser scanning data.

The present invention can also be understood to be a surveying system for processing surveying data. The surveying data includes data that is obtained by a surveying device and data that is obtained by a UAV. The surveying device has a first camera and a combination of a laser scanner and a total station, in which relationships of exterior orientation parameters between the first camera, the laser scanner, and the total station are preliminarily known. The UAV is mounted with a second camera. The surveying system includes an image data receiving unit, a laser scanning data receiving unit, a first 3D model generator, and a mapping unit. The image data receiving unit receives image data of photographic images taken by the first camera and the second camera. The laser scanning data receiving unit receives laser scanning data obtained by the laser scanner. The first 3D model generator generates a first 3D model of an object that is subjected to laser scanning, on the basis of the laser scanning data obtained in laser scanning. While the UAV is flying, the surveying device positions the UAV by using the total station. The mapping unit maps the photographic images taken by the second camera, on the first 3D model, on the basis of the result of positioning of the UAV by the total station.

The present invention can also be understood to be a surveying system for processing surveying data. The surveying data includes data that is obtained by a surveying device and data that is obtained by a UAV. The surveying device has a first camera and a combination of a laser scanner and a total station, in which relationships of exterior orientation parameters between the first camera, the laser scanner, and the total station are preliminarily known. The UAV is mounted with a second camera. The surveying system includes an image data receiving unit, a laser scanning data receiving unit, a first 3D model generator, and a mapping unit. The image data receiving unit receives image data of photographic images taken by the first camera and the second camera. The laser scanning data receiving unit receives laser scanning data obtained by the laser scanner. The first 3D image generator generates a first 3D model of an object that is subjected to laser scanning, on the basis of the laser scanning data obtained in laser scanning. While the UAV is flying, the surveying device positions the UAV by using the total station. The mapping unit maps the photographic images taken by the second camera, on the photographic image taken by the first camera, on the basis of the result of positioning by the total station.

In the mapping of the present invention, the second camera preferably takes photographic images multiple times of the object that is subjected to laser scanning, while the UAV is flying. In addition, it is preferable that position and attitude of the second camera for each of the multiple photographic images be calculated on the basis of positional relationships between a large number of feature points in the multiple photographic images and the second camera, and on the basis of positioning data of the UAV obtained by the total station. Moreover, the mapping is preferably performed on the basis of relationships between the laser scanning data, and the positions and the attitudes of the second camera.

The present invention provides a technique for effectively utilizing photographic images taken by the UAV in inspection or monitoring by photographing using the UAV.

### BRIEF DESCRIPTION OF DRAWINGS

Fig. 1 is a schematic view of an embodiment.
Fig. 2A is a block diagram of a surveying device, and Fig. 2B is a block diagram of a UAV.
Fig. 3 is a block diagram of a processor.
Fig. 4 is a flowchart showing an example of a processing procedure.
Fig. 5 is a flowchart showing an example of a processing procedure.

### PREFERRED EMBODIMENTS OF THE INVENTION

### Overview

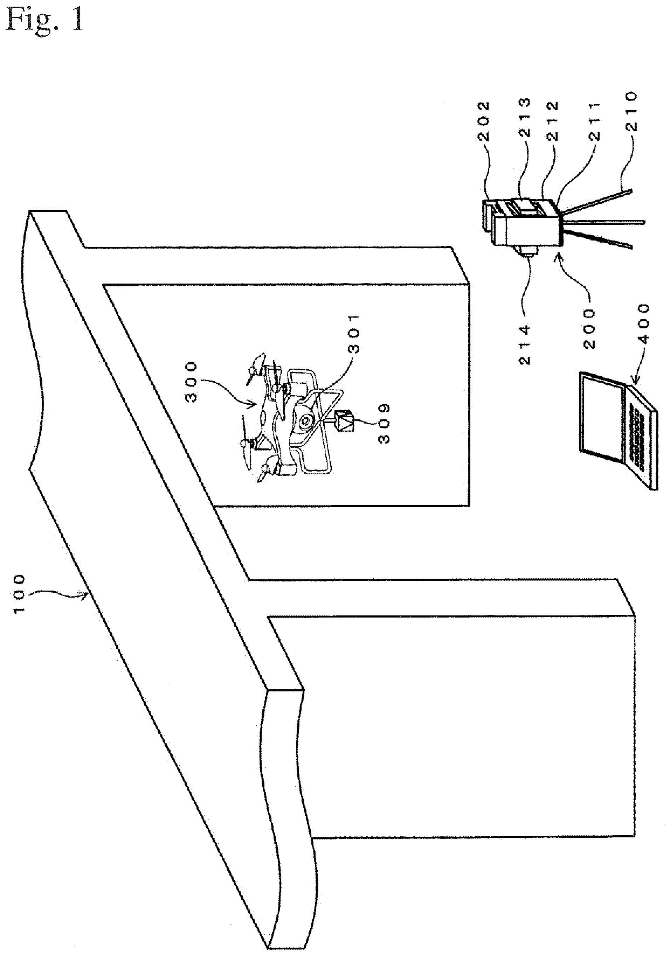

Fig. 1 shows a general outline of a system using the present invention. Fig. 1 shows a bridge 100, a surveying device 200, a UAV 300, and a processor 400. The bridge 100 is an example of infrastructure to be subjected to visual maintenance inspection. The surveying device 200 has a combined structure of a total station and a laser scanner. The UAV 300 is made to fly to take detailed images of the bridge 100.

The processor 400 generates a flight plan of the UAV 300 on the basis of surveying data that is obtained by the surveying device 200. This flight plan includes a flight route and a plan as to the photographing direction of the UAV 300 or the direction of a camera 301, during flight. The processor 400 integrates and processes images of the bridge 100 and a 3D model that are obtained by the surveying device 200, and detailed images of the bridge 100 that are obtained by the UAV 300. The direction or attitude of the camera 301 is obtained from a direction of the UAV 300 that is flying. Thus, the direction of the camera 301 is obtained by determining the attitude of the UAV 300 that is flying. The direction of the UAV 300 is measured by an IMU.

The processor 400 is composed of a commercially available personal computer (PC) and exchanges data with the surveying device 200 through an appropriate communication means, such as wireless LAN. The surveying device 200 sends the following data to the processor 400. The data includes laser scanning data, image data of photographic images that are taken by an incorporated camera, and positioning data that is obtained by positioning the UAV 300. In addition, photographic image data that is obtained by the UAV 300 and flight log data are also sent to the processor 400.

### Surveying Device

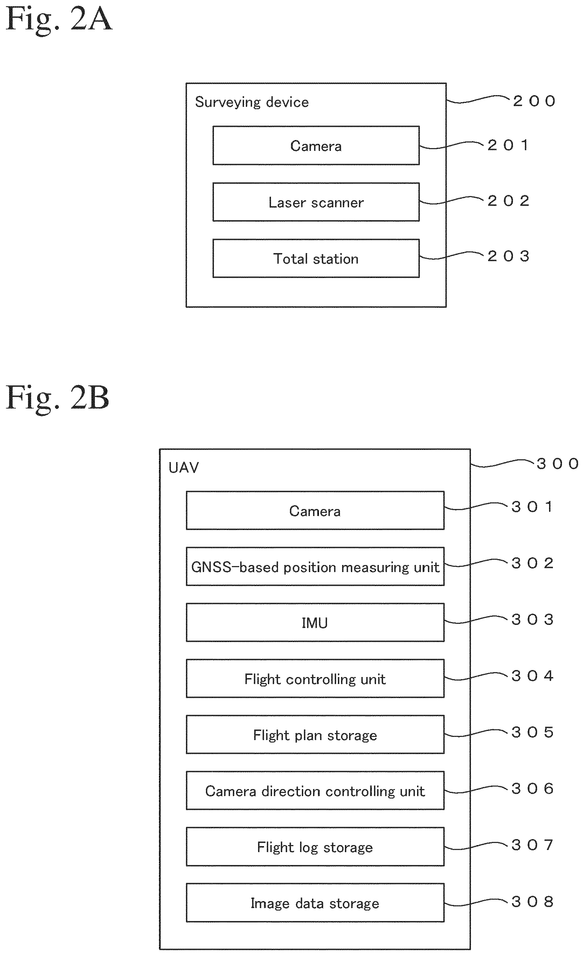

Fig. 1 shows an appearance of the surveying device 200. Fig. 2A shows a block diagram of the surveying device 200. The surveying device 200 has a combined structure of a total station and a laser scanner. Surveying devices having such a structure are publicly known, as disclosed in Japanese Unexamined Patent Applications Laid-Open Nos. 2019-117127, 2019-100915, and 2019-90653.

As shown in Fig. 2A, the surveying device 200 includes a camera 201 (first camera), a laser scanner 202, and a total station 203. As shown in Fig. 1, the surveying device 200 also includes a base 211, a horizontal rotation unit 212, a vertical rotation unit 213, and the laser scanner 202. The base 211 is fixed on the top of a tripod 210. The horizontal rotation unit 212 is joined to the base 211 in a horizontally rotatable manner. The vertical rotation unit 213 is joined to the horizontal rotation unit 212 in a manner vertically rotatable in an elevation angle direction and a depression angle direction. The laser scanner 202 is fixed on the top of the horizontal rotation unit 212.

The camera 201 is contained in the vertical rotation unit 213. The optical system of the camera 201 is disposed separately from a telescope 214, which will be described later. The camera 201 is directed in the same direction as the telescope 214 and takes wide-angle images centering on an optical axis center of the telescope 214 or an optical axis center of the total station 203. The imaging unit of the camera 201 is composed of a CCD image sensor or a CMOS image sensor.

The vertical rotation unit 213 includes the telescope 214 as an optical system. The telescope 214 is also used as an optical system of the total station 203. A user can perform sighting operation of the total station 203, through the telescope 214. Although the optical system of the camera 201 is prepared separately from the telescope 214 in this example, imaging can also be performed by the camera 201, through the telescope 214. In this case, the camera 201, the telescope 214, and the total station 203 share some parts of the optical system.

The laser scanner 202 performs laser scanning in a vertical plane that contains the optical axis of the telescope 214. The laser scanner 202 includes a mirror that rotates on a rotation axis in a horizontal direction. While the mirror rotates, the mirror reflects continuous pulsed light from a light emitting part, whereby laser scanning light is emitted in the vertical plane. The pulsed light of the laser scanning light that is reflected from a reflector, enters the mirror and is received by a light receiving unit. The laser scanning is performed by rotating the horizontal rotation unit 212, whereby laser scanning of the entire surroundings or laser scanning of a desired object is performed.

The total station 203 includes the light emitting unit, a reference optical path, the light receiving unit, and a distance measuring unit. The light emitting unit emits distance measuring laser light. The reference optical path receives branched light of the light from the light emitting unit. The light receiving unit receives the distance measuring laser light that is reflected from an object to be positioned and also receives reference light that has propagated the reference optical path. The distance measuring unit measures a distance on the basis of a difference in light reception timing, or a phase difference, between the distance measuring light and the reference light. The horizontal rotation angle of the horizontal rotation unit 212 and the vertical rotation angle of the vertical rotation unit 213 are precisely measured by an encoder, and these measured values and the measured distance value are used to position the object to be positioned, by the total station 203.

The basic structure and the principle of obtaining laser scanning point clouds of the laser scanner 202, and the basic structure and the principle of positioning of the total station 203, are basically the same as those of surveying devices in which a total station and a laser scanner are combined together, disclosed in Japanese Unexamined Patent Applications Laid-Open Nos. 2019-117127, 2019-100915, and 2019-90653.

Relationships of exterior orientation parameters (position and attitude) between the camera 201, the laser scanner 202, and the total station 203 are preliminarily obtained and are already known. In the surveying device 200, the origin of the camera coordinate system of the camera 201, which is the projection origin of the camera 201, is set as the mechanical origin. Laser scanning point clouds that are obtained by the laser scanner 202, and three-dimensional coordinates of a point that is positioned by the total station 203, are described in a local coordinate system using this mechanical origin as an origin.

### UAV

Fig. 2B shows a block diagram of the UAV 300. The UAV 300 includes a camera 301, a GNSS-based position measuring unit 302, an IMU 303, a flight controlling unit 304, a flight plan storage 305, a camera direction controlling unit 306, a flight log storage 307, and an image data storage 308. In addition, the UAV 300 includes propellers necessary to fly, motors for driving the propellers, a battery for supplying power to the motors, and a wireless communication unit. The basic structure of the UAV 300 is the same as that for an ordinary UAV.

The camera 301 is capable to taking still images and taking moving images. Exterior orientation parameters (position and attitude) of the camera 301 relative to the vehicle body of the UAV 300 are preliminarily obtained and are already known. Moreover, positional relationships or off-set positional relationships, between the camera 301 and a reflection prism 309 (described later), are also preliminarily obtained and are already known.

In this example, the direction of the camera 301 is controlled by changing the attitude of the vehicle body of the UAV 300. It is also possible to vary the direction (attitude) of the camera 301 relative to the vehicle body of the UAV 300 by using a driving mechanism, such as a motor.

The GNSS-based position measuring unit 302 performs positioning on the basis of navigation signals from a navigation satellite, which is represented by a GPS satellite. The positioning is performed by absolute positioning or relative positioning. The IMU 303 is an inertia measuring unit and measures acceleration acting on the UAV 300 and change in attitude of the UAV 300.

The flight plan storage 305 stores a flight plan that is set prior to the flight. The flight plan includes a flight route of the UAV 300 and attitude of the UAV 300 or attitude of the camera 301 during flight of the UAV 300 along the flight route. The flight route and the attitude of the UAV 300 are described in the local coordinate system using the mechanical origin of the surveying device 200 as the origin. This coordinate system may use an absolute coordinate system. The absolute coordinate system is a coordinate system employed in a GNSS, and for example, a three-dimensional position is described in terms of latitude, longitude, and elevation. The flight plan may also include time information.

The flight controlling unit 304 controls flight of the UAV 300 that flies the scheduled flight route stored in the flight plan storage 305. The UAV 300 is capable of autonomous flying in accordance with the flight plan. Of course, the flight can be manually performed by an operator.

The camera direction controlling unit 306 controls the direction of the camera 301 in accordance with the flight plan, which specifies the relationships between the flight route stored in the flight plan storage 305, and the directions of the camera 301. The direction of the camera 301 can also be manually controlled by an operator.

The flight log storage 307 stores data relating to records of flight, specifically, relationships between times, flight positions, and attitudes of the vehicle body. The image data storage 308 stores image data of photographic images taken by the camera 301. The image data is stored in the image data storage 308 in associated with photographing times, positions of the camera 301 at the time of photographing, and directions of the camera 301 at the time of photographing.

The UAV 300 includes a gimbal mechanism in which the camera 301 and the reflection prism 309 are included. The position in the UAV 300 of the reflection prism 309, and the positional relationships between the reflection prism 309 and the camera 301, are known. Thus, the position of the UAV 300 and the position of the camera 301 can be determined by positioning the reflection prism 309, with the use of the total station 203 of the surveying device 200. A technique for tracking and positioning the UAV 300 by using the reflection prism 309 as an object, with the use of the total station 203 of the surveying device 200, is disclosed in, for example, Japanese Unexamined Patent Applications Laid-Open Nos. 2019-45425 and 2019-138842.

### Processor

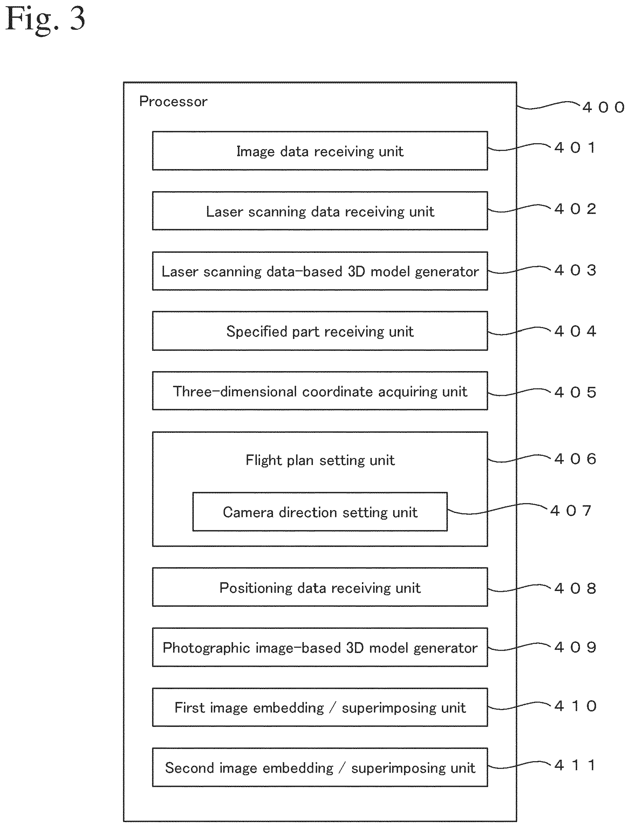

Fig. 3 shows a block diagram of the processor 400. In this example, the processor 400 is composed by using a commercially available personal computer (PC). The PC for use includes a CPU, a memory, a hard disk device, a display, such as a liquid crystal display unit, each type of user interface, such as a keyboard or a mouse, and each type of input-output interface, and the PC also has other components and typical functions that are generally provided in an ordinary PC.

The PC is installed with application software programs for implementing the functional units shown in Fig. 3, and the processor 400 shown in Fig. 3 is implemented by software. One, some, or all of the functional units of the processor 400 can also be composed of a dedicated electronic circuit. For example, one, some, or all of the functional units of the processor 400 can be composed by using an FPGA. Alternatively, one, some, or all of the functional units of the processor 400 can be composed by using a data processing server that is connected to an internet line.

The processor 400 includes an image data receiving unit 401, a laser scanning data receiving unit 402, a laser scanning data-based 3D model generator 403, a specified part receiving unit 404, a three-dimensional coordinate acquiring unit 405, a flight plan setting unit 406, and a camera direction setting unit 407. The processor 400 also includes a positioning data receiving unit 408, a photographic image-based 3D model generator 409, a first image embedding/superimposing unit 410, and a second image embedding/superimposing unit 411. The first image embedding/superimposing unit 410 embeds or superimposes an image that is obtained by the UAV 300, in or on an image that is obtained by the surveying device 200. The second image embedding/superimposing unit 411 embeds or superimposes an image that is obtained by the UAV 300, in or on a 3D model that is obtained by the surveying device 200.

The image data receiving unit 401 receives image data of photographic images that are taken by the camera 201 of the surveying device 200 and also receives image data of photographic images that are taken by the camera 301 of the UAV 300. The image data of photographic images taken by the camera 301 is stored in an appropriate storage area in the processor 400, in associated with data of photographing times, directions of the camera 301 at the time of photographing, positions of the UAV 300 positioned by the surveying device 200, and attitudes of the UAV 300 measured by the IMU 303. The laser scanning data receiving unit 402 receives laser scanning data or data of laser scanning point clouds, which is obtained by the laser scanner 202 of the surveying device 200.

The laser scanning data-based 3D model generator 403 generates, on the basis of the laser scanning data obtained by the laser scanner 202, a 3D model of the laser scanned object, or more specifically, a 3D model based on a viewpoint of the surveying device 200 in a local coordinate system. In this example, a 3D model of the bridge 100 is generated on the basis of the laser scanning data obtained by the laser scanner 202.

Generation of a 3D model based on laser scanning data is disclosed in, for example, WO 2011/070927 and Japanese Unexamined Patent Applications Laid-Open Nos. 2012-230594 and 2014-35702. Point cloud data (laser scanning point clouds), which is composed of laser scanned points, can also be used in a 3D model.

The specified part receiving unit 404 receives information of a position specified by a user, which position is specified in an image obtained by the surveying device 200. In this example, a photographic image of the bridge 100 that is taken by the camera 201 is displayed on the display of the PC that operates as the processor 400. A user who is watching the display specifies a desired position in the photographic image, which is obtained by the surveying device 200, through the input interface of the PC. Information (image coordinate values) of the desired position that is specified in the photographic image, is received by the specified part receiving unit 404.

For example, a desired part of the bridge 100 of which the user desires to obtain a detailed image, is specified. In response to the specification, as described later, a flight route for obtaining the detailed image is generated on the basis of the 3D model that is obtained in laser scanning. Then, a detailed image of the specified part is obtained by using the UAV 300.

The three-dimensional coordinate acquiring unit 405 acquires three-dimensional coordinates of the desired position received by the specified part receiving unit 404. The relationships of the exterior orientation parameters between the camera 201 and the laser scanner 202 are known. In this state, laser scanning data (laser scanning point clouds), which is obtained by the laser scanner 202, is superimposed on the photographic image taken by the camera 201, whereby a composite image of the image and the point clouds is obtained. In a case in which a desired position is specified in the composite image, three-dimensional coordinates of a laser scanned point closest to this specified part are acquired as three-dimensional coordinates of the specified part. This process is performed by the three-dimensional coordinate acquiring unit 405.

The specification that is performed by the user is not limited to one position, and it may be multiple positions. In addition, a region having a set area can also be specified.

The flight plan setting unit 406 sets a flight plan of the UAV 300. The flight plan includes a flight scheduled route of the UAV 300 and settings relating to directions of the camera 301 during flight of the UAV 300 along the flight scheduled route.

The flight route is set as described below. First, the three-dimensional coordinate acquiring unit 405 acquires three-dimensional coordinates of the desired position, which is specified by the user. Then, a position of the UAV 300 (position of the camera 301) appropriate for taking a photograph of the specified part, is calculated as a photographing position.

The flight route may be set by setting a specific area as an objective. For example, in a case in which a desired area of the bridge 100 is specified as an object to be photographed, it is possible to set a flight route that allows photographing of the specified area without omission. For another example, it is also possible to specify a desired part of an object, such as a pillar part of a bridge, and to set a flight route for photographing the specified part.

The accuracy of the photographing position of the UAV 300 may be approximate. This is because the UAV 300 is positioned in such a manner that the position of the on-board reflection prism 309 is continuously positioned precisely by the total station 203, and then the optical position of the camera 301 is calculated on the basis of this positioning by using off-set parameters. Of course, the photographing position of the UAV 300 may be determined with high accuracy.

In one example, a viewpoint position in front of the specified part is calculated as the photographing position. At this time, a position of the UAV 300 (position of the camera 301) where the UAV 300 that is flying does not interfere with the bridge 100, and a detailed image having a predetermined resolution is obtained, is calculated as the photographing position. Herein, the photographing position is the position of the optical origin of the camera 301.

The detailed image is used for detecting phenomena, such as corrosion, delaminating, or cracking, of a concrete surface, and is a close-up image, compared with the photographic image obtained by the surveying device 200. The photographing distance of the camera 301 is generally approximately 5 to 10 meters. Of course, the photographing distance may be shorter or longer.

In setting the direction of the camera 301, the photographing position (viewpoint position) in front of the specified part is calculated. Specifically, on the basis of the 3D model generated by the laser scanning data-based 3D model generator 403, a normal at the specified part is calculated, and the photographing position is determined on this normal. If interference with the bridge 100 is likely to occur, a position that does not cause the interference, but is as close as possible to the normal, is determined as the photographing position.

In one example, the 3D model is generated by calculating surfaces and TINs from the laser scanning data. The normal can be obtained by calculating a normal to a surface of the 3D model or a normal to a surface that fits to an object expressed by a TIN.

Then, a flight route that passes the calculated photographing position of the UAV 300 is set as the scheduled flight route. As to multiple photographing positions, the flight route is set by connecting them. The above process is performed by the flight plan setting unit 406.

In addition, the flight plan setting unit 406 sets the direction of the camera 301 during flight of the UAV 300. This process is performed by the camera direction setting unit 407.

First, the camera direction setting unit 407 calculates a point on the flight scheduled route and the direction of the bridge 100 as viewed from this point. At this time, the position that is received by the specified part receiving unit 404 must be contained in the photographing area.

The coordinates of the scheduled flight route and the coordinates of the 3D model of the bridge 100 are described in the same coordinate system, which is the local coordinate system having an origin at the surveying device 200, in this example. Thus, the direction of the bridge 100 viewed from the UAV 300, or more exactly, viewed from the camera 301, can be mathematically calculated by determining a vector starting from the UAV 300 (camera 301) and ending at the position of the object to be photographed. This process sets the directions to which the camera 301 should be directed during flight of the UAV 300.

The positioning data receiving unit 408 receives positioning data of the UAV 300, which is measured by the total station 203. In this example, the total station 203 continuously tracks and positions the reflection prism 309, which is provided to the UAV 300, during flight of the UAV 300. This positioning data is received by the positioning data receiving unit 408, as positions of the UAV 300 during flight.

The photographic image-based 3D model generator 409 generates a 3D model of the object to be photographed, based on the photographic images taken by the camera 301, in accordance with the principles of structure from motion (SFM) (multi-view stereo photogrammetry) or photogrammetry.

In order to generate the 3D model from the photographic images obtained by the UAV 300, the photographing interval is set so that stereo photographic images will be obtained. Specifically, the photographing interval is set so that images photographed in a consecutive manner or in a very short time interval will contain, in part, the same photographed portion. This is the same as the manner of photographing in ordinary aerial photogrammetry. Alternatively, a moving image may be obtained, and frame images of this moving image may be used as still images. In a case of performing photographing by the UAV 300 instead of performing stereo photogrammetry, photographing timing is set so that the shutter is closed at the photographing position.

Among the consecutive photographic images, multiple images, basically, two images, that are obtained in a consecutive manner or in a very short time interval, are selected as stereo images. Thereafter, an orthographic image is generated from the stereo images, feature points are extracted from the stereo images constituting the orthographic image, and correspondence relationships of the feature points between the stereo images are determined. Moreover, three-dimensional coordinates of the corresponding points are calculated by using a method of intersection, and a 3D model is generated by using the corresponding points in which the three-dimensional coordinates are determined. These processes are performed by the photographic image-based 3D model generator 409.

In the method of intersection, the positioning data of the reflection prism 309 that is received by the positioning data receiving unit 408, is used as position of the camera 301, and data of the IMU 303, which is mounted on the UAV 300, is used as data of attitude (direction) of the camera 301.

The following describes an example of details of the processes performed by the photographic image-based 3D model generator 409. First, stereo photographic images, after being subjected to correction of lens distortion, etc., are extracted from an obtained image group. Then, feature points are extracted from these stereo photographic images, and correspondence relationships of the extracted feature points are determined between the stereo photographic images. There are a large number of pairs of the stereo photographic images, and the same process is performed on every pair of the stereo photographic images.

Thereafter, relative orientation is performed to determine relative positional relationships between the position (viewpoint position) of the camera 301 and the position of each feature point. As a result of the relative orientation, a relative 3D model that is composed of the positions of the camera 301 and each feature point, is generated. Normally, the UAV 300 moves while flying, and there are multiple positions of the camera 301 with respect to corresponding images. The positioning data of the UAV 300 (positioning data of the reflection prism 309), which is measured by the total station 203, is input to each of the multiple positions of the camera 301. At this time, the positional relationships between the camera 301 and the reflection prism 309 are already known, and therefore, these relationships are incorporated into calculation formulas as off-set parameters.

The above process provides a scale (actual dimensions) to the relative 3D model, which is obtained by the relative orientation, and the relative 3D model is revised into a 3D model having dimensions. As a result, a 3D model having the multiple positions of the camera 301 and the coordinate values of each feature point is obtained. This process is absolute orientation.

The coordinate values of the camera positions, which are obtained by the absolute orientation, are pieces of the positioning data of the UAV 300 (positioning data of the reflection prism 309), which is measured by the total station 203. That is, these coordinate values use the coordinate system employed in the surveying device 200, which is the local coordinate system using the mechanical origin of the surveying device 200 as the origin. Thus, the 3D model having the multiple positions of the camera 301 and the coordinate values of each feature point is described in the coordinate system employed in the surveying device 200, that is, the local coordinate system using the mechanical origin of the surveying device 200 as the origin.

The absolute orientation determines exterior orientation parameters (position and attitude) of the camera 301 in that coordinate system, which is the local coordinate system using the mechanical origin of the surveying device 200 as the origin, at the time of photographing each image. After the absolute orientation is performed, a bundle adjustment calculation is performed to optimize parameters.

Then, on the basis of the large number of feature points in which positions are determined, a 3D model as viewed from the UAV 300 is generated. The 3D model as viewed from the UAV 300 is described in the local coordinate system using the mechanical origin of the surveying device 200 as the origin.

The technique for generating a 3D model of an object to be photographed from stereo photographic images is disclosed in, for example, Japanese Unexamined Patent Application Laid-Open No. 2013-186816. As to the technique of positioning a UAV, on which is mounted a camera, by using a total station, and the technique of performing structure from motion (SFM) (multi-view stereo photogrammetry) using photographic images taken by the UAV, some examples are disclosed in Japanese Unexamined Patent Applications Laid-Open Nos. 2019-45425 and 2019-138842. The large number of feature points, in which positions are determined, are called "point cloud data", and the point cloud data can also be used in a 3D model as viewed from the UAV 300.

Note that, on the condition that the position in the absolute coordinate system of the surveying device 200 in the installed state is preliminarily determined, the 3D model as viewed from the UAV 300 is described in the absolute coordinate system. In some cases, the origin of the local coordinate system may not be the mechanical origin of the surveying device 200.

As described above, the 3D model as viewed from the UAV 300 is described in the same coordinate system as the 3D model based on the laser scanning data obtained by the laser scanner 202, which is a 3D model as viewed from the surveying device 200. Accordingly, in comparing these two 3D models with each other, no postprocessing relating to position matching of the coordinate systems is required. However, in order to improve accuracy of correspondence between the 3D model as viewed from the UAV 300 and the 3D model as viewed from the surveying device 200, fine adjustment can be performed.

The first image embedding/superimposing unit 410 maps the UAV-based images, which are taken by the camera 301, on the surveying device-based images, which are taken by the camera 201. Herein, the UAV-based images are embedded in, and/or superimposed on, the surveying device-based image.

The following describes the principle of the mapping. It is assumed that the camera 301 (second camera) takes photographic images of the bridge 100 multiple times while the UAV 300 is flying. The bridge 100 is an object to be subjected to laser scanning by the laser scanner 202. Then, multi-view stereo photogrammetry is performed on the multiple photographic images, which are obtained by photographing multiple times. Thus, relative orientation is performed to determine relative relationships between a large number of feature points in the multiple photographic images, and positions and attitudes of the camera 301. Next, absolute orientation is performed by adding to the relative relationships, positioning data of the UAV 300 measured by the total station 203, whereby position and attitude of the camera 301 for each of the multiple photographic images are determined. In this state, on the basis of the relationships between the positions and the attitudes of the camera 301, and the laser scanning data obtained by laser scanning, mapping is performed. This principle is the same as in mapping UAV-based images on a 3D model (described later) that is based on data obtained by the surveying device 200.

For example, a certain UAV-based image is selected. The direction of the optical axis of the camera 301 at the time of taking this UAV-based image is known from exterior orientation parameters of the camera 301 at the time of taking this image. These exterior orientation parameters are obtained by adding data of positions of the UAV 300, which is measured by the total station 203, to relative positional relationships between the camera 301 and a large number of feature points in the stereo photographic images, which are taken by the camera 301.

In addition, three-dimensional positions of objects in the surveying device-based images, which are obtained by the camera 201, are known from the laser scanning data obtained by the laser scanner 202. Thus, it is possible to determine the position of an intersection point of the optical axis of the camera 301 and the surveying device-based image, which is obtained by the camera 201. This enables knowing to which part in the surveying device-based image the UAV-based image corresponds. In this manner, the UAV-based image can be mapped on the surveying device-based image.

In the state in which the UAV-based images are embedded in the surveying device-based images, for example, when a user specifies a desired part in a surveying device-based image that is displayed, a corresponding UAV-based image at the specified part appears as a detailed image or an enlarged image. With the use of this displaying method, visual inspection of the bridge 100 using enlarged images is efficiently and effectively conducted.

The second image embedding/superimposing unit 411 maps the UAV-based images on the 3D model that is based on the laser scanning data obtained by the laser scanner 202, which is the 3D model as viewed from the surveying device 200. Herein, the mapping is performed by embedding and/or superimposing the UAV-based images in and/or on the 3D model as viewed from the surveying device 200.

The following describes a specific example. For example, a certain UAV-based image is selected. The direction of the optical axis of the camera 301 at the time of taking this UAV-based image is known from exterior orientation parameters of the camera 301, which exterior orientation parameters are obtained during the process of structure from motion (SFM) (multi-view stereo photogrammetry) or photogrammetry using the UAV-based images. That is, these exterior orientation parameters are obtained by adding data of positions of the UAV 300 measured by the total station 203, to relative positional relationships between the camera 301 and a large number of feature points in the stereo photographic images, which are taken by the camera 301.

On the other hand, it is possible to determine an intersection point of the optical axis of the camera 301 and the 3D model based on the laser scanning data obtained by the laser scanner 202, which is the 3D model as viewed from the surveying device 200. This enables knowing to which part in the 3D model as viewed from the surveying device 200 the UAV-based image corresponds. On the basis of this, the UAV-based image can be mapped on the surveying device-based image.

The mapping of the UAV-based images on the 3D model as viewed from the surveying device 200 may be performed as follows. In one example, (1) they are associated with each other in data so that a UAV-based image will appear in association with the 3D model as viewed from the surveying device 200 in accordance with operation to the Ul. In another example, (2) each part of a displayed 3D model as viewed from the surveying device 200, is provided with a balloon or a leader, and a corresponding UAV-based image is shown in association with each part. In yet another example, (3) a corresponding UAV-based image is shown at a part that is indicated by a cursor, in the displayed 3D model as viewed from the surveying device 200, or corresponding UAV-based images appear one after another in response to movement of a cursor.

### Example of Processing

Herein described is an example of using the present invention in visually performing inspection or deterioration diagnosis using images for maintenance of a bridge. In this example, detailed images of parts of the bridge are finally obtained by the UAV, and a user or a maintenance worker visually checks the detailed images to visually inspect the bridge.

Fig. 1 illustrates an example of a situation of the processing. First, the surveying device 200 is used to perform laser scanning of the bridge 100 and to take photographic images of the bridge 100. Then, the laser scanning data and the image data of the bridge 100, which are obtained by the surveying device 200, are processed by the processor 400, and the processor 400 sets a flight route of the UAV 300 and sets each condition necessary for the UAV 300 to take photographic images of the bridge 100. On the basis of these settings, the UAV 300 flies to obtain detailed images (enlarged images) necessary for maintenance of the bridge 100. Thereafter, the processor 400 generates a 3D model based on the photographic images taken by the UAV 300, and determines correspondence relationships between this 3D model and a 3D model based on the laser scanning data obtained by the surveying device 200. Moreover, the processor 400 maps the photographic images taken by the UAV 300, on the photographic image taken by the surveying device 200, and also maps the photographic images taken by the UAV 300, on the 3D model based on the laser scanning data of the bridge 100 obtained by the surveying device 200.

### Processing until Taking Detailed Images

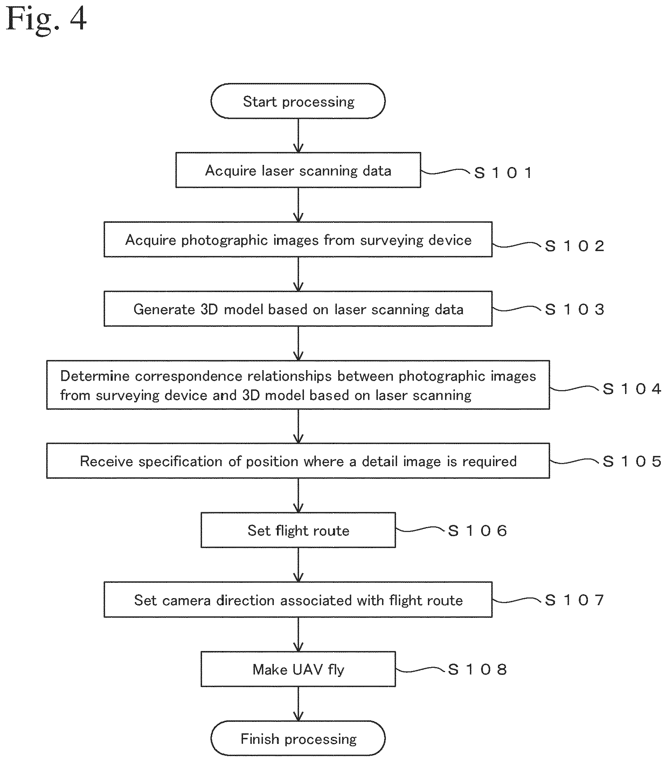

The following describes an overview of processing until taking detailed images of the bridge 100 by the UAV 300. Fig. 4 is a flowchart showing a flow of processing from laser scanning of the bridge 100 by the surveying device 200 until obtaining detailed images of the bridge 100 by the UAV 300.

The programs for executing the processing performed in the processor 400 are stored in an appropriate storage area or a storage medium and are executed by the CPU of the processor 400. This also applies to the flowchart other than that in Fig. 4.

First, the surveying device 200 is installed at a place from which the bridge 100 can be viewed. Then, laser scanning is performed on the bridge 100 by using the laser scanning function of the surveying device 200. This process provides laser scanning data (laser scanning point clouds) of the bridge 100. The laser scanning data includes three-dimensional coordinates, which are described in the local coordinate system using the mechanical origin of the surveying device 200 as the origin. Of course, on the condition that exterior orientation parameters in the absolute coordinate system or global coordinate system relating to the surveying device 200 are known, the laser scanning point clouds can be described in the absolute coordinate system.

The laser scanning data, which is obtained by the surveying device 200, is sent to the processor 400 and is received by the laser scanning data receiving unit 402 of the processor 400 (step S101).

Then, the user or the maintenance worker operates the surveying device 200 to sight an area for visual inspection of the bridge 100, through the telescope 214, and the user then uses the camera 201 to take photographs.

The image data that is obtained by the camera 201 is sent to the processor 400 and is acquired by the image data receiving unit 401 of the processor 400 (step S102).

Next, the processor 400 generates a 3D model of the bridge 100 on the basis of the laser scanning data obtained in step S101 (step S103). This process is performed by the laser scanning data-based 3D model generator 403.

In addition, the processor 400 obtains composite data in which the laser scanning data obtained in step S101 is superimposed on the images obtained in step S102 and determines correspondence relationships therebetween (step S104). This enables knowing a three-dimensional position of image coordinates in the photographic image (two-dimensional position in the image) taken by the camera 201, from the three-dimensional coordinate values of the point included in the laser scanning data.

The images that are obtained in step S102 are shown on the display of the processor 400 or on an appropriate display. The user looks at the displayed image and specifies a part where the user desires to obtain detailed images. For example, a desired part is specified in the displayed image of the bridge 100 by using a cursor or a stylus. The information relating to this specification is read by a user interface (UI) of the PC that operates as the processor 400, and then it is received by the specified part receiving unit 404 of the processor 400 (step S105). The user may specify one position or multiple positions. In addition, a continuous region having some area can also be specified.

After receiving the specification of the position at which the user desires to obtain detailed images, the processor 400 sets a flight plan of the UAV 300 on the basis of the information of the specified part. The setting of the flight plan involves setting of a flight route (step S106) and setting of directions of the camera 201 during flight (step S107).

In step S106, a scheduled flight route of the UAV 300 is set so as to pass or reach a position of a viewpoint (camera position) for photographing the desired position of the bridge 100, which is specified by the user. This process is performed by the flight plan setting unit 406.

In step S107, directions (photographing directions) of the camera 301 of the UAV 300 are set in associated with the scheduled flight route set in step S106. In other words, the directions to which the camera 301 should be directed during flight are set. This process is performed by the camera direction setting unit 407.

After the scheduled flight route of the UAV 300 and the directions (photographing directions) of the camera 301 during flight are set, the UAV 300 is made to fly in accordance with these settings (step S108). During this flight, the camera 301 is directed to the set directions, and still images are consecutively taken with a specific interval. The photographing movement of the camera 301 during flight can also be operated by the user.

In this example, the UAV 300 repeats taking still images of the bridge 100 at a specific interval, such as 0.5 seconds or 1 second, by using the camera 301, while the UAV 300 is flying. The photographing timing is set so that photographic images taken in a consecutive manner or at a very short time interval will contain, in part, the same photographed portion. This is the same as the manner of photographing in ordinary aerial photogrammetry.

In another case, a moving image may be taken by the camera 301. For example, while the UAV 300 is flying, a moving image of 30 frames per second or 60 frames per second is taken by the camera 301. In this case, multiple frame images are extracted at an appropriate photographing time interval, and the extracted multiple frame images are used to generate stereo images.

### Processing Relating to 3D Data

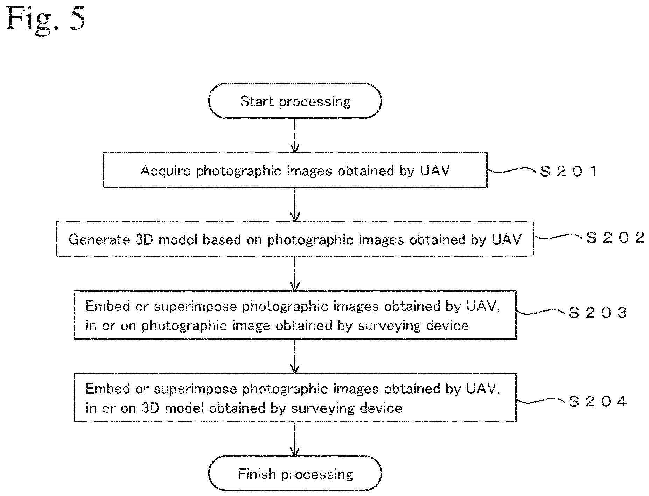

The following describes the processing relating to the 3D data obtained by the surveying device 200 and the 3D data obtained from the photographic images taken by the UAV 300. Fig. 5 is a flowchart showing an example of a processing procedure.

First, the processor 400 acquires image data of photographic images taken by the camera 301 of the UAV 300 (step S201). This process is performed by the image data receiving unit 401. The acquisition of the image data is performed after the flight of the UAV 300 is completed. In another case, the image data may be wirelessly transmitted from the UAV 300 that is flying.

After the image data from the camera 301 is acquired, a 3D model of the bridge 100 as the object to be photographed, is generated on the basis of the image data by structure from motion (SFM) (multi-view stereo photogrammetry) or photogrammetry (step S202). This process is performed by the photographic image-based 3D model generator 409. The 3D model can be generated also by SFM using a moving image. In this case, SFM is performed on a large number of frame images composing the moving image.

The process in step S202 provides a 3D model of the bridge 100. At this time, the images that are the basis of this 3D model are photographic images taken at close distances to the bridge 100, and therefore, the generated 3D model represents parts of the bridge 100.

Herein, a large number of 3D models that represent parts of the bridge 100 that differ slightly from each other are obtained. Thus, these 3D models are stitched together, whereby a 3D model of a strip-shaped region of the bridge 100 is obtained along the flight route of the UAV 300. This resultant 3D model is used as a 3D model as viewed from the UAV 300.

The 3D model as viewed from the UAV 300 is described in the same coordinate system as the 3D model generated in step S103, which is hereinafter referred to as a "3D model as viewed from the surveying device 200". This is because the UAV 300 (position of the camera 301) is positioned by the surveying device 200, and the positioning result is used to generate the 3D model as viewed from the UAV 300 by using SFM. The two 3D models are defined in the same coordinate system, whereby the 3D model as viewed from the UAV 300 is obtained in the state in which correspondence relationships with the 3D model as viewed from the surveying device 200 are determined. In addition, generating the 3D model as viewed from the UAV 300 automatically provides integrated data of the 3D model as viewed from the UAV 300 and the 3D model as viewed from the surveying device 200.

Thus, it is not particularly necessary to perform processing for determining the correspondence relationships between these two 3D models. Note that, optionally, fine adjustment may be performed by removing greatly deviating points or in another manner, in order to enhance accuracy of the correspondence relationships between the two 3D models.

Next, the photographic images of the bridge 100 taken by the UAV 300 (UAV-based images), are embedded in the photographic images of the bridge 100 taken by the surveying device 200 (step S203). This process is performed by the first image embedding/superimposing unit 410. Instead of embedding, superimposing may be performed.

As described above, the correspondence relationships between the photographic images of the bridge 100 taken by the surveying device 200 (surveying device-based images), and the photographic images of the bridge 100 taken by the UAV 300 (UAV-based images), are determined without having to perform special postprocessing.

Normally, the former images (surveying device-based images) are wide images or wide-angle images of the bridge 100 that are taken from relatively long distances, whereas the latter images (UAV-based images) are enlarged images of the bridge 100 that are taken from relatively close distances. In consideration of this, the above-described correspondence relationships are used in embedding the latter enlarged images in the former wide images. This process is performed in step S203.

The correspondence relationships between the photographic images of the bridge 100 taken by the surveying device 200 and the photographic images of the bridge 100 taken by the UAV 300 may be finely adjusted in order to further enhance accuracy thereof.

The detailed image-embedded data enables implementing a user interface (UI) that, for example, shows a corresponding enlarged image (corresponding UAV-based image) on the PC display when a user specifies a desired part in the photographic image taken by the surveying device 200, which is installed on the ground. With the use of this UI, the visual inspection of the bridge 100 can be efficiently and precisely conducted.

In addition, the images that are obtained in step S203 also enable implementing a UI in which a desired part of a displayed surveying device-based image is switched to a UAV-based image at a certain magnification by increasing the magnification.

After step S203, the UAV-based images are embedded in or superimposed on the 3D model that is obtained by the surveying device 200 in laser scanning (3D model as viewed from the surveying device 200) (step S204). This process provides data in which each part in the 3D model is associated with a corresponding UAV-based image. This process is performed by the second image embedding/superimposing unit 411. It is also possible to paste the UAV-based images to the 3D model.

In one example, data in which the UAV-based images are embedded in the 3D model obtained by the surveying device 200, is obtained. In this case, it is possible to implement a Ul that operates as follows: when a user specifies a desired part of the 3D model that is displayed on the display, a corresponding UAV-based image at the specified part appears.

### Applicable Object

The present invention can be applied not only to bridges, but also to buildings, elevated bridges, plant facilities, scarps and slopes reinforced with concrete, dams, expressways, railroads, amusement facilities, sports-related facilities, such as various stadiums and ball game grounds, other various infrastructure facilities, etc.

### Usage of Laser Scanning Light

While the UAV 300 is tracked and positioned by using the total station function of the surveying device 200, the laser scanning function of the surveying device 200 can be executed at the same time. Herein, there is described an example of utilizing a bright spot of the laser scanning light (point at which the laser scanning light is reflected by an object) in calculating position and attitude of the camera 301 mounted on the UAV 300.

In one example, in the condition that the shutter speed of the camera 301 is 1/100th seconds and the scanning frequency of the laser scanning is 1 kHz, one photographic image taken by the camera 301 can at maximum contain 10 laser scanned points. This number of laser scanned points may be 10 or fewer, depending on the photographing range and the scanning speed.

Note that this usage is limited to a case in which the laser scanning area of the laser scanner 202 overlaps the photographed area of the camera 301. In addition, the camera 301 is required to be able to measure the wavelength of the laser scanning light from the surveying device 200 and to capture bright points of the laser scanning light, which is short pulsed light, in the image.

Specifically, the following processing is performed. First, information of laser scanned points at the time the shutter opens or at the time of exposure in photographing is obtained from the photographing time of the UAV-based image. From this information, information of bright points of the laser scanned points contained in the UAV-based image are identified. That is, position information of the laser scanned points contained in the UAV-based image is identified. Then, position and attitude of the camera 301 are calculated by using the laser scanned point as a reference point.

On the other hand, the laser scanned points can also be utilized to determine correspondence relationships between the surveying device-based image and the UAV-based image. First, the relationships between the surveying device-based image, which is taken by the camera 201, and the laser scanning point clouds, which are obtained by the laser scanner 202, are known. Thus, the relationships between the surveying device-based image and the UAV-based image can be determined via bright points of the laser scanned points contained in the UAV-based image taken by the camera 301.

In yet another example of usage of the laser scanned points, a possibility of insufficient shutter speed, an excessive moving speed of the UAV 300, or the like, is determined when bright points are not lined up in a single line in a photographic image.

In this manner, the laser scanner of the surveying device 200 can also be utilized for purposes other than obtaining point cloud data.

### Other Matters

A laser scanner may be mounted on the UAV 300. The UAV 300, on which the laser scanner is mounted, can obtain laser scanning point clouds.

### Advantages

The 3D model of the bridge 100 that is the object of visual inspection is obtained on the basis of the laser scanning data, which is obtained by the surveying device 200 installed on the ground, and the flight course of the UAV 300 is set on the basis of this 3D model. Thus, it is possible to make the UAV 300 fly without interfering with the bridge 100. In addition, the directions during flight, of the camera 301 mounted on the UAV 300, are set on the basis of this 3D model, whereby detailed images of parts of the bridge 100 are efficiently obtained.

Moreover, the detailed images that are obtained by the UAV 300 are mapped on the photographic image (or 3D model) of the bridge 100 obtained by the surveying device 200, whereby visual inspection using the photographic images of the bridge 100 can be efficiently and effectively conducted.

The above-described technique enables, in the coordinate system based on the surveying device 200, (1) setting the flight route of the UAV 300 and the directions of the camera 301 during flight, and (2) generating a 3D model based on the photographic images taken by the UAV 300. Moreover, it is possible to (3) map the photographic images taken by the UAV 300 on the photographic image taken by the surveying device 200, and (4) map the photographic images taken by the UAV 300 on the 3D model obtained by the surveying device 200.

The above-described technique eliminates the need to perform position matching or registration between the 3D data that is generated from the data measured by the surveying device 200, and the 3D data that is generated on the basis of the data obtained by the UAV 300. Registration between different coordinate systems is complicated and imposes heavy burdens, and in addition, it may be incorrectly performed. Thus, dispensing with this operation enables improved operation efficiency and accuracy.

For example, in a situation of performing inspection or deterioration diagnosis of a building, with no design data, registration operation of coordinate system between data of the object and data obtained by a UAV during flight is not necessary in postprocessing, whereby defect inspection and measurement are efficiently performed.

The present invention can be used in maintenance and surveying of infrastructure facilities by using a UAV and a surveying device that has a total station function and a laser scanner function in combination.

The present invention is further defined by the following embodiments:
1. A surveying system for processing surveying data, the surveying data including data that is obtained by a surveying device and data that is obtained by a UAV, the surveying device having a first camera and a combination of a laser scanner and a total station, in which relationships of exterior orientation parameters between the first camera, the laser scanner, and the total station are preliminarily known, the UAV being mounted with a second camera and being capable of autonomous flying, the surveying system comprising a processor or circuitry that is configured to:
   receive image data of photographic images taken by the first camera and the second camera;
   receive laser scanning data obtained by the laser scanner;
   receive a desired part specified in the photographic image taken by the first camera;
   set a flight route of the UAV that contains a position of a viewpoint for viewing the specified part, on the basis of the laser scanning data; and
   set directions of the second camera during flight of the UAV along the flight route, on the basis of the laser scanning data.
2. The surveying system according to embodiment 1, wherein the UAV obtains photographic images of the desired part, and the position of the viewpoint is in front of the desired part.
3. The surveying system according to embodiment 1 or 2, wherein a normal at the desired part is calculated on the basis of the laser scanning data, and the position of the viewpoint is calculated on the basis of the normal.
4. The surveying system according to any one of embodiments 1 to 3, wherein the processor or circuitry is further configured to:
   generate a first 3D model of an object that is subjected to laser scanning, on the basis of the laser scanning data obtained in laser scanning; and
   generate a second 3D model of the object in accordance with a principle of stereo photogrammetry, on the basis of the photographic images taken by the second camera.
5. The surveying system according to embodiment 4, wherein, while the UAV is flying, the surveying device positions the UAV by using the total station, and the second 3D model is generated in the same coordinate system as the first 3D model, on the basis of result of positioning of the UAV by the total station.
6. The surveying system according to embodiment 4 or 5, wherein the processor or circuitry is further configured to map the photographic images taken by the second camera, on the first 3D model, on the basis of the result of positioning of the UAV by the total station.
7. The surveying system according to embodiment 6, wherein the mapping involves embedding or superimposing the photographic images taken by the second camera, in or on the first 3D model.
8. The surveying system according to embodiment 4 or 5, wherein the processor or circuitry is further configured to map the photographic images taken by the second camera, on the photographic image taken by the first camera, on the basis of the result of positioning by the total station.
9. The surveying system according to embodiment 8, wherein the mapping involves embedding or superimposing the photographic images taken by the second camera, in or on the photographic image taken by the first camera.
10. The surveying system according to embodiment 4 or 5, wherein the laser scanner performs laser scanning of an object to be surveyed,
   the second camera detects a bright point of laser scanning light that is emitted in laser scanning on the object to be surveyed, and
   attitude of the second camera is calculated on the basis of the bright point.
11. A surveying method for processing surveying data, the surveying data including data that is obtained by a surveying device and data that is obtained by a UAV, the surveying device having a first camera and a combination of a laser scanner and a total station, in which relationships of exterior orientation parameters between the first camera, the laser scanner, and the total station are preliminarily known, the UAV being mounted with a second camera and being capable of autonomous flying, the surveying method comprising:
   receiving image data of photographic images taken by the first camera and the second camera;
   receiving laser scanning data obtained by the laser scanner;
   receiving a desired part specified in the photographic image taken by the first camera;
   setting a flight route of the UAV that contains a position of a viewpoint for viewing the specified part, on the basis of the laser scanning data; and
   setting directions of the second camera during flight of the UAV along the flight route, on the basis of the laser scanning data.
12. A non-transitory computer recording medium storing computer-executable instructions for processing surveying data, the surveying data including data that is obtained by a surveying device and data that is obtained by a UAV, the surveying device having a first camera and a combination of a laser scanner and a total station, in which relationships of exterior orientation parameters between the first camera, the laser scanner, and the total station are preliminarily known, the UAV being mounted with a second camera and being capable of autonomous flying, the computer-executable instructions are configured to, when executed by a computer processor, cause the computer processor to:
   receive image data of photographic images taken by the first camera and the second camera;
   receive laser scanning data obtained by the laser scanner;
   receive a desired part specified in the photographic image taken by the first camera;
   set a flight route of the UAV that contains a position of a viewpoint for viewing the specified part, on the basis of the laser scanning data; and
   set directions of the second camera during flight of the UAV along the flight route on the basis of the laser scanning data.
13. A surveying system for processing surveying data, the surveying data including data that is obtained by a surveying device and data that is obtained by a UAV, the surveying device having a first camera and a combination of a laser scanner and a total station, in which relationships of exterior orientation parameters between the first camera, the laser scanner, and the total station are preliminarily known, the UAV being mounted with a second camera, the surveying system comprising a processor or circuitry that is configured to:
   receive image data of photographic images taken by the first camera and the second camera;
   receive laser scanning data obtained by the laser scanner;
   generate a first 3D model of an object that is subjected to laser scanning, on the basis of the laser scanning data obtained in laser scanning; and
   perform mapping,
   wherein, while the UAV is flying, the surveying device positions the UAV by using the total station, and
   wherein the mapping involves mapping the photographic images taken by the second camera, on the first 3D model, on the basis of the result of positioning of the UAV by the total station.
14. A surveying system for processing surveying data, the surveying data including data that is obtained by a surveying device and data that is obtained by a UAV, the surveying device having a first camera and a combination of a laser scanner and a total station, in which relationships of exterior orientation parameters between the first camera, the laser scanner, and the total station are preliminarily known, the UAV being mounted with a second camera, the surveying system comprising a processor or circuitry that is configured to:
   receive image data of photographic images taken by the first camera and the second camera;
   receive laser scanning data obtained by the laser scanner;
   generate a first 3D model of an object that is subjected to laser scanning, on the basis of the laser scanning data obtained in laser scanning; and
   perform mapping,
   wherein, while the UAV is flying, the surveying device positions the UAV by using the total station, and
   wherein the mapping involves mapping the photographic images taken by the second camera, on the photographic image taken by the first camera, on the basis of the result of positioning by the total station.
15. The surveying system according to any one of embodiments 6 to 9, 13, and 14,
   wherein, while the UAV is flying, the second camera takes photographic images multiple times of the object that is subjected to laser scanning,
   wherein positions and attitudes of the second camera in the multiple photographic images are calculated on the basis of positional relationships between a large number of feature points in the multiple photographic images and the second camera, and on the basis of positioning data of the UAV obtained by the total station, and
   wherein the mapping is performed on the basis of relationships between the laser scanning data, and the positions and the attitudes of the second camera.

## Claims

1. A surveying system comprising:
a surveying device (200) having a combination of a laser scanner (202) and a total station (203), in which relationships of exterior orientation parameters between the laser scanner (202) and the total station (203) are preliminarily known;
a UAV (300) being mounted with a camera (301) and being capable of autonomous flying; and
a processor (400) being configured to process surveying data that is obtained by the surveying device (200) and to process surveying data that is obtained by the UAV (300),
the processor (400) comprising:
an image data receiving unit (401) being configured to receive image data of photographic images taken by the camera (301);
a laser scanning data receiving unit (402) being configured to receive laser scanning data obtained by the laser scanner (202);
a 3D model generator (403) being configured to generate a 3D model of a target of the laser scanning, on a basis of the laser scanning data; and
a processing unit (411) being configured to map the photographic images taken by the camera (301), on the 3D model on a basis of a result of positioning the UAV (300) by the total station (203),
the processing unit (411) being further configured to:
determine relative relationships of position and attitude between the camera (301) and a large number of feature points in multiple photographic images, in accordance with a principle of multi-view stereo photogrammetry, the multiple photographic images being taken by the camera (301) in multiple times of photographing;
add the result of positioning the UAV (300), which is obtained by the total station (203), to the relative relationships, thereby obtaining position and attitude of the camera (301) in each of the multiple photographic images;
obtain a direction of an optical axis of the camera (301) on a basis of the position and the attitude of the camera (301);
obtain a position of an intersection point of the optical axis of the camera (301) and the 3D model; and
determine which part in the 3D model, the photographic image that is obtained by the camera (301) corresponds, on a basis of the position of the intersection point.

2. The surveying system according to claim 1, wherein the mapping involves embedding or superimposing the photographic images taken by the camera (301), in or on the 3D model.

3. A surveying method using a surveying device (200), a UAV (300), and a processor (400),
the surveying device (200) having a combination of a laser scanner (202) and a total station (203), in which relationships of exterior orientation parameters between the laser scanner (202) and the total station (203) are preliminarily known,
the UAV (300) being mounted with a camera (301) and being capable of autonomous flying,
the processor (400) being configured to process surveying data that is obtained by the surveying device (200) and to process surveying data that is obtained by the UAV (300),
the surveying method comprising:
receiving image data of photographic images taken by the camera (301);
receiving laser scanning data obtained by the laser scanner (202);
generating a 3D model of a target of the laser scanning; and
mapping the photographic images taken by the camera (301), on the 3D model on a basis of a result of positioning the UAV (300) by the total station (203);
wherein the mapping involves:
determining relative relationships of position and attitude between the camera (301) and a large number of feature points in multiple photographic images, in accordance with a principle of multi-view stereo photogrammetry, the multiple photographic images being taken by the camera (301) in multiple times of photographing;
adding the result of positioning the UAV (300), which is obtained by the total station (203), to the relative relationships, thereby obtaining position and attitude of the camera (301) in each of the multiple photographic images;
obtaining a direction of an optical axis of the camera (301) on a basis of the position and the attitude of the camera (301);
obtaining a position of an intersection point of the optical axis of the camera (301) and the 3D model; and
determining which part in the 3D model, the photographic image that is obtained by the camera (301) corresponds, on a basis of the position of the intersection point.

4. A non-transitory computer recording medium storing computer-executable instructions for controlling operation of a surveying system,
the surveying system comprising a surveying device (200), a UAV (300), and a processor (400),
the surveying device (200) having a combination of a laser scanner (202) and a total station (203), in which relationships of exterior orientation parameters between the laser scanner (202) and the total station (203) are preliminarily known,
the UAV (300) being mounted with a camera (301) and being capable of autonomous flying,
the processor (400) being configured to process surveying data that is obtained by the surveying device (200) and to process surveying data that is obtained by the UAV (300),
the computer-executable instructions being configured to, when executed by a computer processor, cause the computer processor to:
receive image data of photographic images taken by the camera (301);
receive laser scanning data obtained by the laser scanner (202);
generate a 3D model of a target of the laser scanning; and
map the photographic images taken by the camera (301), on the 3D model on a basis of a result of positioning the UAV (300) by the total station (203);
wherein the mapping involves:
determining relative relationships of position and attitude between the camera (301) and a large number of feature points in multiple photographic images, in accordance with a principle of multi-view stereo photogrammetry, the multiple photographic images being taken by the camera (301) in multiple times of photographing;
adding the result of positioning the UAV (300), which is obtained by the total station (203), to the relative relationships, thereby obtaining position and attitude of the camera (301) in each of the multiple photographic images;
obtaining a direction of an optical axis of the camera (301) on a basis of the position and the attitude of the camera (301);
obtaining a position of an intersection point of the optical axis of the camera (301) and the 3D model; and
determining which part in the 3D model, the photographic image that is obtained by the camera (301) corresponds, on a basis of the position of the intersection point.
